# EUROPEAN PATENT SPECIFICATION

(11) **EP 4 634 327 B1**
(45) Date of publication and mention of the grant of the patent: **14.10.2026**
(21) Application number: 23806324.2
(22) Date of filing: 17.11.2023
(51) Int. Cl.: C09K 19/56

(54) **COMPOSITION FOR FORMING A LIQUID CRYSTAL ALIGNMENT FILM**
ZUSAMMENSETZUNG ZUR HERSTELLUNG EINES FLÜSSIGKRISTALLAUSRICHTUNGSFILMS
COMPOSITION POUR FORMER UN FILM D'ALIGNEMENT DE CRISTAUX LIQUIDES

(30) Priority: 16.12.2022 EP 22214116
(43) Date of publication of application: 22.10.2025
(73) Proprietor: Rolic Technologies AG, 4123 Allschwil (CH)
(72) Inventor: BECRET, Thierry, 4123 Allschwil (CH); VISSIERES, Hervé, 4123 Allschwil (CH); ECKERT, Jean-François, 4123 Allschwil (CH); LINCKER, Frédéric, 4123 Allschwil (CH); TANG, Qian, 4123 Allschwil (CH)
(74) Representative: Veenstra, Eva
(86) International application number: PCT/EP2023/082197
(87) International publication number: WO 2024/125945

(56) References cited:
- WO-A1-2015/124483

## Description

The present invention relates to a composition for forming a liquid crystal alignment film, a process for forming a liquid crystal alignment film, a liquid crystal alignment film, and structured or unstructured optical and electro-optical elements and devices comprising the liquid crystal alignment film.

Liquid crystal devices provide displays by controlling the alignment direction of liquid crystal molecules contained in a liquid crystal layer by applying a voltage to electrodes arranged on liquid crystal layer side-surfaces of the substrates. The liquid crystal display device usually includes a liquid crystal alignment film for controlling the alignment direction of the liquid crystal molecules, and the alignment film is arranged on the liquid crystal layer side-surface of the substrate.

As a material for such an alignment film constituting the liquid crystal display device, resins such as polyamic acids, polyimides, polyamides, polysiloxanes, polymaleimides and polyacrylates are conventionally used. For example, alignment films comprising polyimides have been found to exhibit excellent physical properties such as heat resistance, compatibility with liquid crystals, and mechanical strength.

Methods for printing an alignment film include spin coating, roll coating, flexographic printing, and inkjet printing. Inkjet printing is suitable for printing the film on a large substrate with high throughput.

Inkjet printing is however subject to limitations in that the optimum range of physical properties of the ink is narrow. For example, the optimum range of the surface tension is 28 to 40 mN/m, the optimum range of the viscosity 5 to 12 mPa·s, and the optimum range of the boiling point of the solvents is about 180 to 210 °C. Although a large number of solvents and their combinations are available, it is far from trivial to optimize the components and the component ratio of the ink in such a way that the ink is able to meet the various, sometimes conflicting requirements.

Process flaws in the coating process of the alignment layer can manifest themselves as defects of the display quality of a display panel when the alignment film is formed into a panel. These defects are called "Mura" (Japanese for "blemish"). Mura are large patterns of inconsistent luminance across a display. Since conventional inkjet printers used for inkjet printing have a number of heads arranged vertically to the print direction, stripe-shaped irregularities in film thickness may occur if the ink dries prior to leveling of the ink, resulting in display unevenness. Hence, in order to improve the levelling behavior of the ink, low surface tension, low boiling point solvents such as alcohols, ketones or esters, have conventionally been included in the ink, which increase the wetting and spreading properties of the ink.

While wetting and spreading of the ink improve film homogeneity of the alignment layer, excessive spreading can give rise to a certain type of defect called "Frame Mura". It is associated with a diminished alignment effectiveness near the border of the printed film. The cause of this phenomenon resides in a reduced film thickness of the alignment film close to the edges of the printed film, which in turn is caused by the spreading of the ink beyond the printing area.

Therefore, the coating properties of ink, in particular the spreading properties, need to be further improved to increase the film thickness near the border of the printed film without worsening of the film uniformity.

JP 2006-017982 A describes liquid crystal alignment agent for inkjet application, which comprises a polymer having at least one of an amic acid repeating unit and its imidized repeating unit, and N-methylpyrrolidone.

CN 102031122 B describes a liquid crystal alignment agent. Comparative example 2 illustrates a solvent composition comprising NMP, butyl cellosolve, γ-butyrolactone and diethylene glycol ethyl methyl ether.

EP 2 375 278 A1 describes a composition for forming a liquid crystal alignment film, wherein the composition comprises a material for forming a liquid crystal alignment film; 4,6-dimethyl-2-heptanone; diisobutyl ketone; and at least one of y-butyrolactone and N-methyl-2-pyrrolidone.

WO 2015/124483 A1 further describes a photo-alignment composition for the alignment of liquid crystals. It also relates to the liquid crystal alignment film and coating layer prepared from the said composition and the use to fabricate optical and electrooptical elements and devices.

The present inventors have found that the above object is achieved by choice of a specific solvent mixture useful for inkjet printing.

Hence, the invention relates to a composition for forming a liquid crystal alignment film, comprising:
- a photoalignable polymeric material for forming a liquid crystal alignment film which has a side chain comprising a photoalignable group; and
- a solvent mixture comprising, relative to the weight of the solvent mixture, (i) at least one of an N-alkyl pyrrolidone and a lactone in a total amount of 45 to 70 wt.-%; (ii) a diethylene glycol dialkyl ether in an amount of 5 to 15 wt.-%; and (iii) an ethylene glycol monoalkyl ether in an amount so as to add up to 100 wt.-% of the solvent mixture;

the composition having a solids content of 3.0 to 6.0% by weight.

The solvent mixture comprises (i) at least one of an N-alkyl pyrrolidone and a lactone; (ii) an ethylene glycol monoalkyl ether and (iii) a diethylene glycol dialkyl ether.

In the N-alkyl pyrrolidone, the alkyl moiety may be straight-chained or branched. Suitable N-alkyl pyrrolidones include N-(C₁-C₈-alkyl) pyrrolidones, in particular N-(C₁-C₄-alkyl) pyrrolidones, such as N-methyl pyrrolidone, N-ethyl pyrrolidone and N-propyl pyrrolidone. An especially preferred N-alkyl pyrrolidone is N-methyl-2-pyrrolidone.

Suitable lactones include α-lactones such as α-acetolactone, β-lactones such as β-propiolactone, γ-lactones such as γ-butyrolactone, and δ-lactones such as δ-valerolactone. Preferred are β-lactones, γ-lactones and δ-valerolactones, in particular γ-lactones and δ-valerolactones. An especially preferred lactone is γ-butyrolactone.

In the ethylene glycol monoalkyl ether, the alkyl moiety may be straight-chained or branched. Suitable ethylene glycol monoalkyl ethers (glycol ethers) include ethylene glycol monomethyl ether, ethylene glycol monoethyl ether, ethylene glycol monopropyl ether, ethylene glycol monoisopropyl ether, and ethylene glycol monobutyl ether. An especially preferred ethylene glycol monoalkyl ether is ethylene glycol monobutyl ether.

In the diethylene glycol dialkyl ether, the alkyl moiety may be straight-chained or branched. Suitable diethylene glycol dialkyl ethers include diethylene glycol dimethyl ether, diethylene glycol diethyl ether, and diethylene glycol dibutyl ether. An especially preferred diethylene glycol dialkyl ether is diethylene glycol diethyl ether.

In a preferred embodiment, the solvent mixture comprises both an N-alkyl pyrrolidone and a lactone. Preferably, the solvent mixture comprises, relative to the weight of the solvent mixture, 20 to 40 wt.-% of the N-alkyl pyrrolidone and 20 to 40 wt.-% of the lactone, with the proviso that the amounts of the N-alkyl pyrrolidone and the lactone add up to 45 to 70 wt.-%.

In a more preferred embodiment, the solvent mixture comprises (i) the at least one of N-alkyl pyrrolidone and lactone in a total amount of 55 to 65 wt.-%, relative to the weight of the solvent mixture; (ii) the diethylene glycol dialkyl ether in an amount of 7 to 13 wt.-%, relative to the weight of the solvent mixture; and (iii) the ethylene glycol monoalkyl ether in an amount so as to add up to 100 wt.-% of the solvent mixture. Preferably, the solvent mixture comprises, relative to the weight of the solvent mixture, 25 to 35 wt.-% of the N-alkyl pyrrolidone and 25 to 35 wt.-% of the lactone, with the proviso that the amounts of the N-alkyl pyrrolidone and the lactone add up to 55 to 65 wt.-%.

In one embodiment, the N-alkyl pyrrolidone is N-methyl pyrrolidone, the lactone is γ-butyrolactone, the ethylene glycol monoalkyl ether is ethylene glycol monobutyl ether, and the diethylene glycol dialkyl ether is diethylene glycol diethyl ether.

The composition has a solids content of 3.0 to 6.0% by weight, preferably 3.5 to 5.5% by weight, more preferably 3.5 to 5.0% by weight, most preferably 3.7 to 4.7% by weight. The solids comprise the photoalignable polymeric material, as well as additional polymeric materials.

The photoalignable polymeric material is a photoactive polymeric compound comprising photoalignable groups. It is understood that the composition may comprise more than one photoalignable polymeric material.

Suitable photoalignable polymeric materials are well-known in the field of liquid crystal alignment materials. Such materials are used for the preparation of liquid crystal alignment films for the fabrication of optical and electro-optical devices, and are for instance disclosed in the following publications: O. Yaroshuk, Y. Renikov, J. Mater. Chem., 2012, 22, 286-300 and references cited therein; US 5,389,698; US 5,838,407; US 5,602,661; US 6,160,597; US 6,369,869; US 6,717,644; US 6,215,539; US 6,300,991 and US 6,608,661.

Upon irradiation with aligning light, in particular polarized light, the photoalignable groups undergo photoreactions, such as photocrosslinking reactions, dimerization reactions, cis / trans isomerization reactions, rearrangement reactions and degradation reactions. As a result, anisotropy is induced in the photo-alignment layer. Liquid crystals contained in a layer formed on the alignment film may be aligned under the influence of such a photo-induced alignment film.

Photoalignable polymeric materials comprising photoalignable groups are polymers including copolymers, which have a side chain comprising at least one photoalignable group. Preferably, the side chain comprises, in addition to the photoalignable group(s), one or more of an aromatic or an alicyclic group.

In one embodiment, the photoalignable group is selected from cinnamates and chalcones; coumarines and quinolones; stilbenes and cyanostilbenes; azo groups; chromones and chromenes; mono- and di-acetylene groups such as diphenylacetylene group; benzylidenephtalimide group, benzylideneacetophene group, and/or phenylenediacryloyl group. The photoalignable group is optionally substituted. The photoalignable material may contain one or more photoalignable groups.

Preferably, the photoalignable groups are selected from cinnamates and chalcones; coumarines; stilbenes and azo groups. In an especially preferred embodiment, the photoalignable group is a cinnamate.

Suitable photoalignable groups are represented by the following formulae (I) to (VI). The photoalignable group is attached to the polymer backbone at one of its terminal ends (marked by an asterisk * in the generic formulae) via a single bond, a linking group, or a spacer group as discussed below. The distant terminal end carries a monovalent residue.

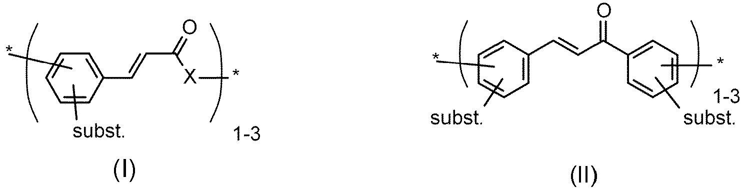

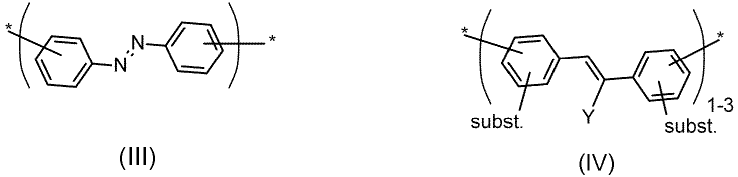

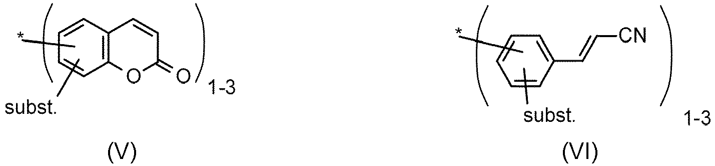

The term "subst." stands for optional substituents as described below.

Formula (I) represents a cinnamate group as an example of an α,β-unsaturated carbonyl group, wherein X is -O-; -S- or -NR^{a}-, and R^{a} is hydrogen or C₁-C₆-alkyl.

Formula (II) represents a chalcone group.

Formula (III) represents an azo group.

Formula (IV) represents a stilbene group, wherein Y is hydrogen, nitrile (cyano, CN) or another electron withdrawing group.

Formula (V) represents a coumarine group.

Formula (VI) represents an α,β-unsaturated nitrile group.

The photoalignable groups can be linked to the polymer backbone via a single bond, via a linking group, such as an ester group, a thioester group, an ether group, a carbonate group, an amide group or a sulfide group, or via a spacer group. Preferably, the photoalignable group is linked to the polymer backbone via a spacer group. The term "spacer group" is understood to mean an optionally substituted aromatic or heteroaromatic group with 6 to 40 carbon atoms, or, preferably, a cyclic, linear or branched, optionally substituted C₁-C₂₄-alkylene group, wherein one or more non-adjacent -CH₂-groups may independently from each other be replaced by a group selected from -O-, -CO-, -CO-O-, -O-CO, -NR^{b}-, -NR^{b}-CO-, -CO-NR^{b}-, -NR^{b}-CO-O-, -O-CO-NR^{b}-, -NR^{b}-CO-NR^{b}-, -CH=CH-, -C≡C-, -O-COO-, and -(CH₃)₂Si-O-Si(CH₃)₂-, wherein R^{b} represents a hydrogen atom or a C₁-C₆-alkyl group.

The photoalignable groups are optionally substituted. Suitable substituents include halogen, for example fluorine, chlorine, and bromine; cyano; C₁-C₄-alkoxy; a carboxylic group; ester groups with linear or branched C₁-C₁₂-alkyl, optionally substituted with fluorine or cyano groups; linear or branched alkyl and cycloalkyl groups with 1 to 12 carbon atoms, optionally substituted with fluorine or cyano groups; and/or aromatic groups with 6 to 18 carbon atoms optionally substituted with the aforementioned groups. In a preferred embodiment, the side chain comprises one or more fluorine atoms.

The backbone of the photoalignable polymeric material is not particularly restricted and may be selected from polyamic acids, polyimides, polyamides, polysiloxanes, polymaleimides and polyacrylates. Especially preferred photoalignable polymeric materials, however, are polysiloxanes and polyamic acid polymers, preferably homo- and copolymers and more preferably copolymers. Polyamic acid polymers and polysiloxanes exhibit excellent film-forming properties. Polyamic acid polymers may be converted to polyimides via heat treatment. Polyimides and polysiloxanes, in turn, have been found to exhibit excellent physical properties such as heat resistance, compatibility with liquid crystals, and mechanical strength.

Hence in one embodiment, the polymeric photoalignable material for forming a liquid crystal alignment comprises repeating units represented by formula (1) 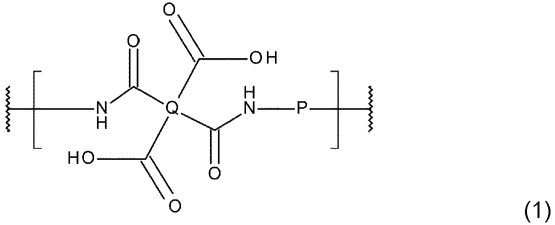 wherein
Q is a tetravalent residue of a tetracarboxylic dianhydride; and
P is a divalent residue of a diamine, wherein at least a portion of P carries a side chain comprising a photoalignable group.

The tetravalent residue Q is understood to be a residue equal to a tetracarboxylic acid (underlying a tetracarboxylic dianhydride) minus the four carboxylic groups.

The divalent residue P is understood to be a residue equal to a diamine minus the two amino groups. At least a portion of P carries a side chain comprising a photoalignable group.

Preferably, the photoalignable groups are selected from cinnamates of formula (I), azo groups of formula (III), coumarines of formula (V) and stilbenes of formula (IV), which may are optionally substituted. In one embodiment, P comprises 1 or 2 cinnamate groups of formula (I), each independently comprising up to three substituents "subst.".

In a preferred embodiment, the side chain comprises, in addition to the photoalignable group(s), one or more of an aromatic or an alicyclic group. A suitable aromatic group is phenylene. Suitable alicyclic groups include cyclohexyl, bicyclohexyl and tricyclohexyl.

The polymeric photoalignable material comprising repeating units represented by formula (I) is typically obtained by polymerizing at least one diamine with an acid dianhydride, wherein at least a portion of the diamine has at least one photoalignable group.

The diamine is preferably selected from optionally substituted compounds of general formula 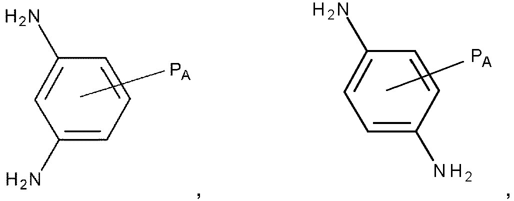 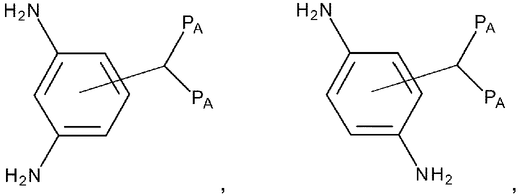 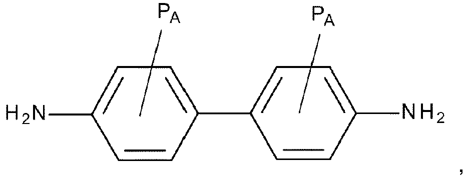 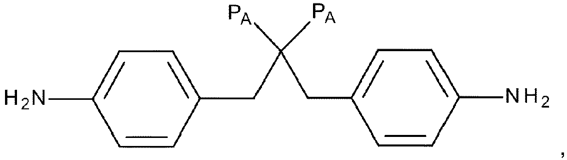 and 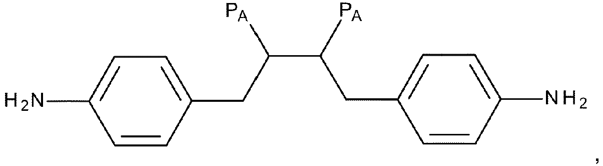 wherein the residue P_{A} incorporates a photoalignable group, preferably represented by one of formulae (I) to (VI), more preferably by formula (I), and wherein the optional substituents are methyl, ethyl, halogen or a methoxy group.

In one embodiment, the residue P_{A} is represented by: 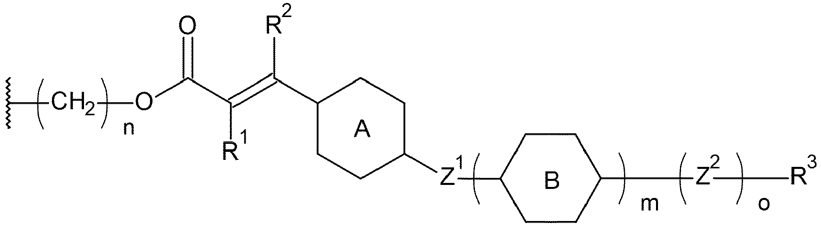 wherein
- A: represents an optionally substituted aromatic or heteroaromatic ring having five or six atoms; preferably optionally substituted phenylene;
- B: independently from each other represent an optionally substituted aromatic group, heteroaromatic group or alicyclic group selected from a monocyclic ring of five or six ring atoms, a bicyclic ring system of eight, nine or ten ring atoms, a tricyclic ring system of thirteen or fourteen ring atoms, a fused cyclic system of eight to twenty ring atoms, or a bridged cyclic system comprising eight to twenty ring atoms and a bridging group selected from -O-, -CO-, -CO-O-, - O-CO-, -NR'-, -NR'-CO-, -CO-NR'-, -NR'-CO-O-, -O-CO-NR'-, -NR'-CO-NR'-, - CH=CH-, -C≡C-, -O-CO-O-, and -(CH₃)₂Si-O-Si(CH₃)₂-, wherein R' represents a hydrogen atom or a C₁-C₆-alkyl group;
- Z¹ and Z²: independently from each other represent a bridging group selected from -O-, -CO-, -CO-O-, -O-CO-, -NR'-, -NR'-CO-, -CO-NR'-, -NR'-CO-O-, -O-CO-NR'-, -NR'-CO-NR'-, -CH=CH-, -C≡C-, -O-CO-O-, and -(CH₃)₂Si-O-Si(CH₃)₂-, wherein R' represents a hydrogen atom or a C₁-C₆-alkyl group;
- R¹ and R²: independently from each other are hydrogen, halogen or nitrile;
- R³: represents optionally substituted C₁-C₃₀-alkyl or O-C₁-C₃₀-alkyl, which may be substituted with at least one of halogen or nitrile, preferably fluorine,
- m: is an integer between 0 and 4, preferably 1 or 2,
- n: is an integer between 0 and 6, preferably 1 or 2, more preferably 2; and
- o: is an integer between 0 and 2, preferably 0 or 1, more preferably 0.

In a preferred embodiment, B independently from each other represent an optionally substituted aromatic group or alicyclic group selected from a monocyclic ring of five or six ring atoms, a bicyclic ring system of eight, nine or ten ring atoms, or a tricyclic ring system of thirteen or fourteen ring atoms. More preferably, B independently from each other represent optionally substituted phenylene, cyclohexyl, bicyclohexyl or tricyclohexyl, in particular optionally substituted phenylene, cyclohexyl or bicyclohexyl.

Preferably, Z¹ and Z² are selected from -O- and -O-CO-. More preferably, Z¹ is -O-CO-.

In a preferred embodiment, R¹ and R² independently from each other are hydrogen, nitrile or fluorine. More preferably, R¹ and R² are hydrogen.

Preferably, R³ represents optionally substituted C₁-C₆-alkyl, wherein the substituents are selected from nitrile and halogen, preferably fluorine, and where the substituents are preferably located at the terminal position. In a preferred embodiment, R³ is selected from C₁-C₆-alkyl and fluorinated C₁-C₆-alkyl, in particular from unsubstituted C₂-C₆-alkyl and C₂-C₆-alkyl comprising a terminal trifluoromethyl moiety.

In a preferred embodiment, the residue P_{A} is selected from: 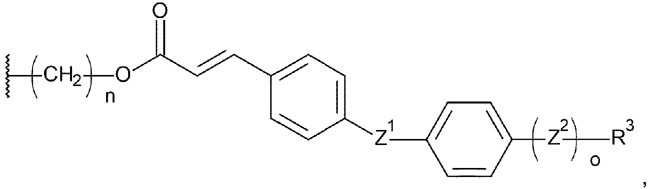 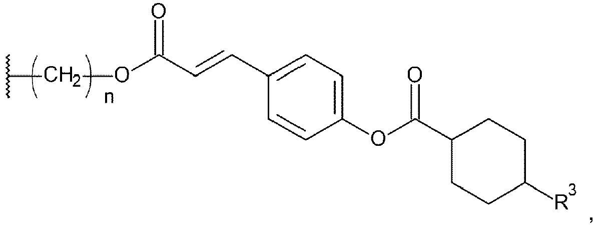 and

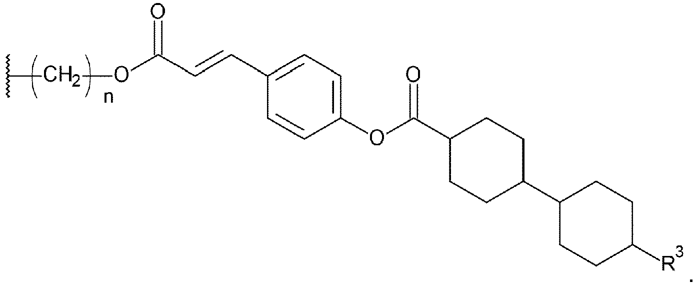

The tetravalent organic residue of a tetracarboxylic dianhydride Q may be derived from aliphatic tetracarboxylic dianhydrides, cycloaliphatic tetracarboxylic dianhydrides or aromatic tetracarboxylic dianhydrides. Preferably, the tetravalent organic residue of a tetracarboxylic dianhydride Q is derived from cycloaliphatic tetracarboxylic dianhydrides.

Suitable tetracarboxylic dianhydrides are well-known in the field of liquid crystal alignment materials and are used as monomers or comonomers to prepare liquid crystal alignment films for the rubbing method or the photoalignment technique. Suitable dianhydrides include dianhydrides of formula (VII)

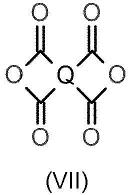

Examples of suitable aliphatic or cycloaliphatic tetracarboxylic dianhydrides include:
4,9-dioxatricyclo[5.3.0.02,6]decane-3,5,8,10-tetrone;
4,10-dioxatricyclo[6.3.1.02,7]dodecane-3,5,9,11-tetrone;
2,3,5-tricarboxy-cyclopentylacetic-1,2:3,4-dianhydride (all isomers);
1,2,3,4-cyclobutanetetracarboxylic dianhydride;
1,3-dimethyl-1,2,3,4-cyclobutanetetracarboxylic dianhydride;
1,3-dimethyl-1,3-dimethyl-1,2,3,4-cyclobutanetetracarboxylic dianhydride;
1,2,3,4-tetramethyl-1,2,3,4-cyclobutanetetracarboxylic dianhydride;
1,2,3,4-cyclopentanetetracarboxylic dianhydride;
2,3,5-tricarboxycyclopentylacetic dianhydride;
3,5,6-tricarboxynorbornane-2-acetic dianhydride;
2,3,4,5-tetrahydrofuranetetracarboxylic dianhydride;
5-(2,5-dioxotetrahydro-3-furanyl)-3a,4,5,9b-tetrahydronaphtho[1,2-c]furan-1,3-dione;
5-(2,5-dioxotetrahydro-3-furanyl)-5-methyl-3a,4,5,9b-tetrahydronaphtho[1,2-c]furan-1,3-dione;
5-(2,5-dioxotetrahydro-3-furanyl)-5-ethyl-3a,4,5,9b-tetrahydronaphtho[1,2-c]furan-1,3-dione;
5-(2,5-dioxotetrahydro-3-furanyl)-7-methyl-3a,4,5,7a-tetrahydro-2-benzofuran-1,3-dione;
5-(2,5-dioxotetrahydro-3-furanyl)-7-ethyl-3a,4,5,7a-tetrahydro-2-benzofuran-1,3-dione;
5-(2,5-dioxotetrahydro-3-furanyl)-6-methylhexahydro-2-benzofuran-1,3-dione;
6-(2,5-dioxotetrahydro-3-furanyl)-4-methylhexahydro-2-benzofuran-1,3-dione;
5-(2,5-dioxotetrahydrofural)-3-methyl-3-cyclohexene-1,2-dicarboxylic dianhydride;
bicyclo[2.2.2]oct-7en-2,3,5,6-tetracarboxylic dianhydride;
bicyclo[2.2.2]octane-2,3,5,6-tetracarboxylic acid dianhydride;
1,8-dimethylbicyclo[2.2.2]oct-7-ene-2,3,5,6-tetracarboxylic acid dianhydride;
tetrahydro-4,8-methanofuro[3,4-d]oxepin-1,3,5,7-tetrone;
3-(carboxymethyl)-1,2,4-cyclopentanetricarboxylic acid 1,4:2,3-dianhydride;
hexahydrofuro[3',4':4,5]cyclopenta[1,2-c]pyran-1,3,4,6-tetrone;
rel-[1S,5R,6R]-3-oxabicyclo[3.2.1]octane-2,4-dione-6-spiro-3'-(tetrahydrofuran2',5'-dione);
4-(2,5-dioxotetrahydrofuran-3-yl)tetrahydronaphthalene-1,2-dicarboxylicacid dianhydride;
5-(2,5-dioxotetrahydro-furan-3-yl)-3-methyl-3-cyclohexene-1,2-dicarboxylic-acid dianhydride;
4-tert-butyl-6-(2,5-dioxotetrahydro-3-furanyl)-2-benzofuran-1,3-dione;
9-isopropyloctahydro-4,8-ethenofuro[3',4':3,4]cyclobuta[1,2-f][2]benzofuran-1,3,5,7-tetrone;
1,2,5,6-cyclooctanetetracarboxylic acid dianhydride;
octahydro-4,8-ethenofuro[3',4':3,4]cyclobuta[1,2-f][2]benzofuran-1,3,5,7-tetrone;
octahydrofuro[3',4':3,4]cyclobuta[1,2-f][2]benzofuran-1,3,5,7-tetrone;
tetrahydro-3,3'-bifuran-2,2',5,5'-tetrone; and
tetrahydro-5,9-methano-1H-pyrano[3,4-d]oxepin-1,3,6,8(4H)-tetrone.

Examples of suitable aromatic tetracarboxylic dianhydrides include:
pyromellitic acid dianhydride;
3,3',4,4'-benzophenonetetracarboxylic acid dianhydride;
4,4'-oxydiphthalic acid dianhydride;
3,3',4,4'-diphenylsulfonetetracarboxylic acid dianhydride;
1,4,5,8-naphthalenetetracarboxylic acid dianhydride;
2,3,6,7-naphthalenetetracarboxylic acid dianhydride;
3,3',4,4'-dimethyldiphenylsilanetetracarboxylic acid dianhydride;
3,3',4,4'-tetraphenylsilanetetracarboxylic acid dianhydride;
1,2,3,4-furantetracarboxylic acid dianhydride;
4,4'-bis(3,4-dicarboxyphenoxy)diphenyl sulfide dianhydride;
4,4'-bis(3,4-dicarboxyphenoxy)diphenyl sulfone dianhydride;
4,4'-bis(3,4-dicarboxyphenoxy)diphenylpropane dianhydride;
3,3',4,4'-biphenyltetracarboxylic acid dianhydride;
ethylene glycol bis(trimellitic acid) dianhydride;
4,4'-(1,4-phenylene)bis(phthalic acid) dianhydride;
4,4'-(1,3-phenylene)bis(phthalic acid) dianhydride;
4,4'-(hexafluoroisopropylidene)diphthalic acid dianhydride;
4,4'-oxydi(1,4-phenylene)bis(phthalic acid) dianhydride;
4,4'-methylenedi(1,4-phenylene)bis(phthalic acid) dianhydride; and
4-tert-butyl-6-(2,5-dioxotetrahydro-3-furanyl)-2-benzofuran-1,3-dione.

Especially preferred examples of suitable tetracarboxylic dianhydrides include:
4,9-dioxatricyclo[5.3.0.02,6]decane-3,5,8,10-tetrone;
4,10-dioxatricyclo[6.3.1.02,7]dodecane-3,5,9,11-tetrone;
1,2,3,4-cyclobutanetetracarboxylic acid dianhydride;
1,2,3,4-cyclopentanetetracarboxylic acid dianhydride;
2,3,5-tricarboxycyclopentylacetic acid dianhydride;
tetrahydro-4,8-methanofuro[3,4-d]oxepin-1,3,5,7-tetrone;
3-(carboxymethyl)-1,2,4-cyclopentanetricarboxylic acid 1,4:2,3-dianhydride;
hexahydrofuro[3',4':4,5]cyclopenta[1,2-c]pyran-1,3,4,6-tetrone;
5-(2,5-dioxotetrahydrofuran-3-yl)-3-methyl-3-cyclohexene-1,2-dicarboxylic acid dianhydride;
pyromellitic acid dianhydride;
4-(2,5-dioxotetrahydrofuran-3-yl)tetrahydronaphthalene-1,2-dicarboxylic acid dianhydride;
5-(2,5-dioxotetrahydro-3-furanyl)-5-methyl-3a,4,5,9b-tetrahydronaphtho[1,2-c]furan-1,3-dione;
5-(2,5-dioxotetrahydro-3-furanyl)-3a,4,5,9b-tetrahydronaphtho[1,2-c]furan-1,3-dione;
5-(2,5-dioxotetrahydro-3-furanyl)-7-methyl-3a,4,5,7a-tetrahydro-2-benzofuran-1,3-dione;
4-tert-butyl-6-(2,5-dioxotetrahydro-3-furanyl)-2-benzofuran-1,3-dione;
4,4'-(hexafluorneoisopropylidene)diphthalic acid dianhydride and
bicyclo[2.2.2]oct-7-ene-2,3,5,6-tetracarboxylic acid dianhydride; and
tetrahydro-5,9-methano-1H-pyrano[3,4-d]oxepin-1,3,6,8(4H)-tetrone.

Most preferably, the tetracarboxylic dianhydride is selected from 4,9-dioxatri-cyclo[5.3.0.02,6]decane-3,5,8,10-tetrone and 4,10-dioxatricyclo[6.3.1.02,7]dodecane-3,5,9,11-tetrone.

In one embodiment, the composition contains a polymeric material other than the specific photoalignable polymeric material described above (hereinafter: "additional polymeric material").

In a preferred embodiment, the additional polymeric material is obtainable by reaction of tetracarboxylic dianhydrides as described above and a diamine. The diamine typically has 6 to 40 carbon atoms. Suitable diamines include aliphatic diamines, cycloaliphatic diamines and/or diamines comprising aryl groups. They can be used alone or in a combination of two or more.

Suitable aliphatic diamines include compounds of formula (VIII)

H₂N - alkylene - NH₂ (VIII)

wherein the term "alkylene" has the meaning of C₁-C₂₄ alkylene, preferably C₁-C₁₂ alkylene, which is branched, straight chain, optionally substituted, optionally interrupted by a linking group as defined above, or an alicyclic group, such as cyclohexylene or a C₁₇-C₄₀ alicyclic group, or -Si(R^{c})₂- or -O-Si(R^{c})₂-, wherein R^{c} represents hydrogen, fluorine, chlorine, nitrile, unsubstituted or fluorine-substituted C₁-C₁₂ alkyl, in which one or more carbon atom, -CH= or CH₂- group may be replaced by a linking group; preferably hydrogen, methyl or fluorine, and more preferably hydrogen.

Suitable cycloaliphatic diamines include compounds of formulae (IX) and (X) 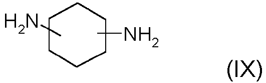 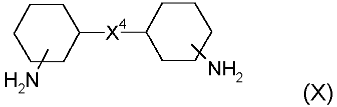 wherein X⁴ is a linking group as defined above, preferably -COO-, -CONH-; a single bond, -O-, -S-, methylene, ethylene, propylene, more preferably single bond, or, with CF₃, OCF₃, F, optionally substituted methylene, ethylene, propylene, butylene or pentylene, and wherein the cyclohexylene groups may be unsubstituted or independently from each other be mono- or poly-substituted by hydrogen, halogen, hydroxyl, a carbocyclic or heterocyclic non-aromatic group or C₁-C₃₀ alkyl, which is branched, straight chain, optionally substituted, optionally interrupted by a linking group as described above, more preferably by a carbocyclic or heterocyclic non-aromatic group, such as cyclohexylene or a C₁₇-C₄₀ alicyclic group, more preferably the cyclohexylene groups may be independently from each other be substituted by halogen or optionally substituted methylene, ethylene or propylene.

Suitable aromatic diamines or diamines comprising an aryl group, which is optionally substituted, include selected from include compounds of formula (XI) 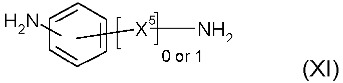 wherein X⁵ is a single bond or C₁-C₃₀ alkyl, wherein C₁-C₃₀alkyl is preferably methyl, ethyl, propyl, butyl, or pentyl;
or compounds of formula (XII) 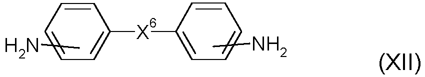 wherein X⁶ is a linking group as defined above, and preferably X⁶ is for example a single bond, -O-, -S- or optionally, straight-chain or branched C₁-C₆ alkylene, -O-(CH₂CH₂O)n-; -O-(C₁-C₁₂alkyl)n-O-, -S-(C₁-C₁₂alkyl)n-S-, triazine, 1,3,5-triazinane-2,4,6-trione, 1,1'-cyclohexylene, NR⁵((C₁-C₆alkyl)ₙNR⁶), -(piperidine)ₙ₁-(C₁-C₆alkyl)ₙ-(piperidine)ₙ, wherein n is an integer from 1 to 6, and n1 is an integer from 0 to 6, preferably X⁶ is a single bond, straight-chain or branched C₁-C₆ alkylene or -O-; and wherein R⁵ and R⁶ each independently from each other represents a hydrogen or C₁-C₆ alkyl, preferably hydrogen;
or compounds of formula (XIII) 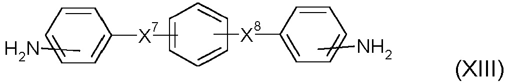 wherein X⁷ and X⁸ are a linking group as defined above;
or compounds of formula (XIV) 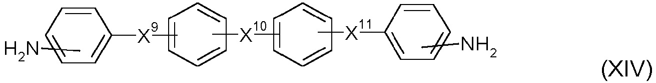 wherein X⁹, X¹⁰ and X¹¹ are a linking group as defined above;
or compounds of formulae (XV) 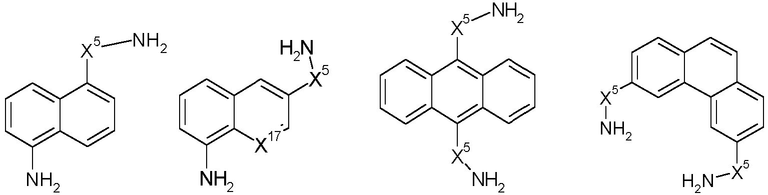 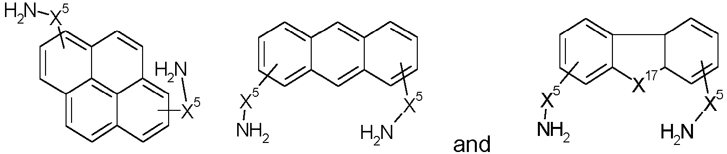 wherein X⁵ has the meaning given above and X¹⁷ is CH₂, O, or NH;
or compounds of formula (XVI) 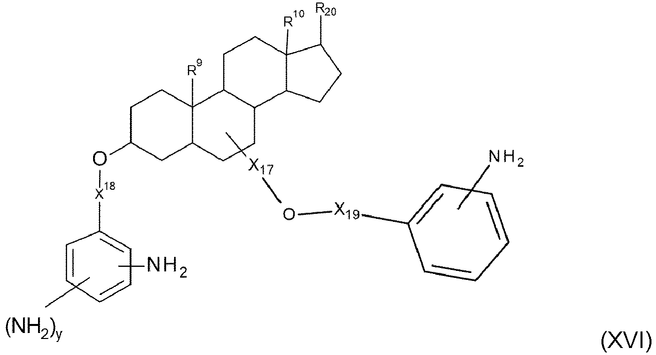 wherein R⁹ and R¹⁰ are C₁-C₃₀ alkyl, preferably methyl; R²⁰ is 2-methylheptane; y is 0 or 1; and X¹⁷, X¹⁸ and X¹⁹ is a single bond, carbonyl or NH.

In the compounds of formulae (XI), (XII), (XIII), (XIV), (XV) and (XVI), the aryl groups, in particular the phenylene rings, are optionally substituted with at least one of halogen, hydroxyl, a carbocyclic or heterocyclic non-aromatic group, or C₁-C₃₀alkyl or O-C₁-C₃₀alkyl, wherein C₁-C₃₀alkyl is preferably methyl, ethyl, propyl, butyl, pentyl or 2-methylheptane, or the aryl groups, in particular the phenylene rings, may be substituted with at least one of hexyl, 1,1-cyclohexyl, 4-(C₁-C₃₀ alkyl)-cyclohexyl, 3,4"-bis[4'-(C₁-C₃₀alkyl)-1,1'-bi(cyclohexyl)-4-yl], 1,1'-bi(cyclohexyl)-4-yl, 2-pyridine, pyrrolidine-2,5-dione, which is optionally substituted by CF₃, OCF₃, F, benzyl, pentyl, benzoic acid ester, 4-(phenoxycarbonyl), carboxylic acid, -SO₃H, -PO₃H, or -OR¹⁵, wherein R¹⁵ is C₁-C₃₀ alkyl, or optionally substituted benzyl.

Diamines comprising at least one optionally substituted aryl group are preferred.

Examples of aliphatic and cycloaliphatic diamines include:
trimethylene diamine;
tetramethylene diamine;
hexamethylene diamine;
octamethylene diamine;
1,4-diaminocyclohexan;
4,4'-methylenebis(cyclohexylamine);
4,4'-methylenebis(2-methylcyclohexylamine);
isophorone diamine;
tetrahydrodicyclopentadienylene diamine; and
1,3-adamantanediamine.

Examples of preferred diamines comprising an aryl group include:
1,3-bis(aminomethyl)benzene;
1,4-bis(aminomethyl)benzene;
m-phenylenediamine;
p-phenylenediamine;
2-methylbenzene-1,3-diamine;
1,5-diaminonaphthalene;
4,4'-diaminodiphenyl ether;
3,4'-diaminodiphenyl ether;
4,4'-diaminodiphenyl sulfide;
4,4-diamino-2,2'-dichlorodiphenyl disulphide;
4,4'-diaminodiphenyl sulfone;
3,3'-diaminodiphenyl sulfone;
4,4'-diaminodiphenylmethane;
3,3'-diaminodiphenylmethane;
3,4'-diaminodiphenylmethane;
4,4'-diamino-2,2'-dimethylbiphenyl;
4,4'-diamino-3,3'-dimethyldiphenyl methane;
4,4'-diaminodiphenylethane;
3,3'-diaminobenzophenone;
4,4'-diaminobenzophenone;
3,4'-diaminobenzophenone;
2,2-bis(4-aminophenyl)hexafluoropropane;
2,2-bis[4-(4-aminophenoxy)phenyl]hexafluoropropane;
2,2-bis[4-(4-aminophenoxy)phenyl]propane;
1,4-bis(4-aminophenoxy)benzene;
1,3-bis(4-aminophenoxy)benzene;
4,4'-diamino-diphenylene-cycylohexane;
3,5-diamino-3'-trifluormethylbenzanilide;
3,5-diamino-4'-trifluormethylbenzanilide;
4,4'-diaminobenzanilide;
2-amino-4-[1-(3-amino-4-hydroxy-phenyl)-1-methyl-ethyl]phenol;
diaminofluorene derivatives, such as 2,7-diaminofluorene and 9,9-bis(4-aminophenyl)fluorene;
diaminoanthraquinone derivatives, such as 1,5-diaminoanthraquinone;
benzidine derivatives such as 4,4'-diaminobiphenyl; 4,4'-Diamino-3,3'-dimethylbiphenyl;
tetramethylbenzidine; 4,4'-diamino-2,2'-bis(trifluormethyl)biphenyl; 2,2',5,5'-tetrachloro-4,4'-diaminobiphenyl; 2,2'-dichloro-4,4'-diamino-5,5'-dimethoxybiphenyl; 3,3'-dimethoxy-4,4'-diaminobiphenyl;
5-amino-1-(4'-aminophenyl)-1,3,3-trimethylindan;
6-amino-1-(4'-aminophenyl)-1,3,3-trimethylindan;
4-(4-amino-2-methyl-phenyl)-3-methyl-aniline;
4-[4-amino-2-(trifluoromethyl)phenyl]-3-(trifluoromethyl)aniline;
4,4'-methylene-bis(2-chloroaniline);
4,4'-(p-phenyleneisopropylidene)bisaniline;
4,4-(m-phenyleneisopropylidene)bisaniline;
2-(4-aminophenyl)-1H-benzimidazol-5-amine;
bis(4-aminophenoxy)-2,2-dimethylpropane; and
1,5-diaminonaphthalene, 2,7-diaminofluorene.

Examples of more preferred diamines comprising an aryl group include:
m-phenylenediamine;
p-phenylenediamine;
2-methylbenzene-1,3-diamine;
1,5-diaminonaphthalene;
4,4'-diaminodiphenyl ether;
3,4'-diaminodiphenyl ether;
4,4'-diaminodiphenyl sulphide;
4,4'-diaminodiphenyl sulfone;
4,4'-diaminodiphenylmethane;
4,4'-diaminodiphenylethane;
2,2-bis(4-aminophenyl)hexafluoropropane;
2,2-bis[4-(4-aminophenoxy)phenyl]hexafluoropropane;
2,2-bis[4-(4-aminophenoxy)phenyl]propane;
1,4-bis(4-aminophenoxy)benzene;
1,3-bis(4-aminophenoxy)benzene;
2,7-diaminofluorene;
4,4'-diaminobiphenyl;
4,4'-diamino-3,3'-dimethylbiphenyl;
4,4'-diamino-2,2'-dimethylbiphenyl;
4-(4-amino-2-methyl-phenyl)-3-methyl-aniline;
4-[4-amino-2-(trifluoromethyl)phenyl]-3-(trifluoromethyl)aniline;
4,4'-(p-phenylenebisisopropylidene)bisaniline;
4,4'-(m-phenylenebisisopropylidene)bisaniline;
2-(4-aminophenyl)-1H-benzimidazol-5-amine;
bis(4-aminophenoxy)-2,2-dimethylpropane; and
2-amino-4-[1-(3-amino-4-hydroxyphenyl)-1-methyl-ethyl]phenol.

Especially preferred diamines comprising an aryl group include:
p-phenylenediamine;
2-methylbenzene-1,3-diamine;
4,4'-diaminodiphenyl ether;
3,4'-diaminodiphenyl ether;
4,4'-diaminodiphenyl sulfide;
4,4'-diaminodiphenylmethane;
4,4'-diaminodiphenylethane;
2,2-bis[4-(4-aminophenoxy)phenyl]propane;
1,4-bis(4-aminophenoxy)benzene;
1,3-bis(4-aminophenoxy)benzene;
4,4'-Diamino-3,3'-dimethylbiphenyl;
4,4'-diamino-2,2'-dimethylbiphenyl;
4-(4-amino-2-methyl-phenyl)-3-methyl-aniline;
4-[4-amino-2-(trifluoromethyl)phenyl]-3-(trifluoromethyl)aniline;
4,4'-(p-phenylenebisisopropylidene)bisaniline;
4,4'-(m-phenylenebisisopropylidene)bisaniline;
2-(4-aminophenyl)-1H-benzimidazol-5-amine;
bis(4-aminophenoxy)-2,2-dimethylpropane; and
2-amino-4-[1-(3-amino-4-hydroxyphenyl)-1-methyl-ethyl]phenol.

Even more preferred diamines comprising an aryl group are:
4,4'-diaminodiphenyl ether;
3,4'-diaminodiphenyl ether;
4,4'-diamino-2,2'-dimethylbiphenyl;
2-amino-4-[1-(3-amino-4-hydroxyphenyl)-1-methyl-ethyl]phenol.

Further, the composition of the present invention may optionally comprise one or several additives. They are generally used in minor amounts to improve certain performance criteria of the present composition, such as for instance coating and printing behaviour, storage stability and inhibition of colour formation as well as for instance improving the mechanical and thermal properties and the photoalignable properties of the alignment layer produced from the present composition.

The optional additives are commonly classified in groups such as antioxidants, inhibitors, stabilizers, surface active agents, flow improvers, defoaming agents, sensitizers, adhesion promoters, thixotropic agents, pigments, initiators, nucleating agents, clarifying agents, antistatic, slip agents, silica, talc, stabilizers, UV stabilizers, lubricants, coupling agents, antimicrobial agents, crosslinking agents, surfactants, photo-active agents, photosensitizers, photo generators and others.

Additives such as silane-containing compounds and epoxy-containing crosslinking agents may be added. Suitable silane-containing additives are described in Plast. Eng. 36 (1996), (Polyimides, fundamentals and applications), Marcel Dekker, Inc. Suitable epoxy-containing cross-linking additives include 4,4'-methylene-bis-(N,N-diglycidylaniline), trimethylolpropane triglycidyl ether, benzene-1,2,4,5-tetracarboxylic acid 1,2,4,5-N,N'-diglycidyldiimide, polyethylene glycol diglycidyl ether, N,N-diglycidyl-cyclohexylamine and the like.

Other suitable additives include 2,2-dimethoxyphenylethanone, a mixture of diphenyl-methanone and N,N-dimethylbenzenamine or ethyl 4-(dimethylamino)benzoate, 1-hydroxy-cyclohexyl-phenyl-ketone, 2-benzyl-2-dimethylamino-1-(4-morpholinophenyl)-butanone-1, Irgacure^{®} 500 (1:1 mixture by weight of 1-hydroxy-cyclohexyl-phenyl-ketone and benzophenone), 2,2-dimethoxy-1,2-diphenylethan-1-one or Michler's ketone. Non-limiting examples are hydroquinone, 2,6-di-tert-butyl-4-methylphenol (BHT), 4-ethoxyphenol, 4-methoxyphenol, phenothiazine, and N-phenyl-2-naphthylamine.

The amount of additives in the composition is generally less than 20% relative to the total weight of the composition, preferably less than 10% and more preferably less than 5% and more preferably less than 2%.

The invention further relates to a process for forming a liquid crystal alignment film, comprising:
- applying a composition of the invention onto a substrate;
- drying the wet film thus obtained, and
- irradiating the dried film to impart liquid crystal alignment capability.

The substrate may be transparent or non-transparent, and is preferably selected from glass and plastic substrates, polymer films, such as polyethyleneterephthalat (PET), tri-acetyl cellulose (TAC), polypropylen, optionally coated with indium tin oxide (ITO). In particular, the composition may be applied to a support optionally coated with an electrode, for example a glass plate coated with indium-tin oxide (ITO), so that homogeneous layers of 0.050 to 50 µm thickness are produced, preferably 0.050 to 1.00 µm, more preferably 0.080 to 0.120 µm.

The composition may be applied onto the substrate by general coating and printing methods known in the art. Coating methods are for example spin coating, blade coating, knife coating, reverse-roll coating, transfer roll coating, gravure roll coating, kiss roll coating, cast coating, spray coating, slot-orifice coating, calendar coating, electrodepositing coating, dip coating or die coating. Printing methods include relief printing such as flexographic printing, inkjet printing, intaglio printing such as direct gravure printing or offset gravure printing, lithographic printing such as offset printing, or stencil printing such as screen printing. A preferred printing method is inkjet printing.

After applying the composition onto the substrate, the wet film is dried and the regions to be oriented are irradiated, for example, with a high-pressure mercury vapour lamp, a xenon lamp or a pulsed UV laser, using a polarizer and optionally a mask for creating images of structures.

The process suitably comprises a heat treatment step of the dried film at a temperature in the range of 80 to 230 °C. When the photoalignable polymeric material is a polyamic acid polymer or copolymer, the heat treatment step allows for converting most or all of the polyamic acid groups to polyimide groups. The thus obtained polyimide film exhibits excellent physical properties such as heat resistance, compatibility with liquid crystals, and mechanical strength.

In one embodiment, aligning light is used. Preferably, the wavelengths are in the UV-A, UVB and/or UV/C-range, or in the visible range. It depends on the photoalignable compound which wavelengths are appropriate. Preferably, the photoalignable groups are sensitive to visible and/or UV light. The instant direction of the aligning light may be normal to the substrate or at any oblique angle, excluding 0°. The irradiation with aligning light may be conducted in a single step or in several separate steps. In a preferred embodiment of the invention the treatment with aligning light is conducted in a single step.

More preferably, aligning light is at least partially linearly polarized, elliptically polarized, such as for example circularly polarized, or non-polarized; most preferably at least circularly or partially linearly polarized light, or non-polarized light exposed obliquely. Especially, most preferred aligning light denotes substantially polarised light, especially linearly polarised light.

Polarised light direction is understood to mean the intersection line of the alignment layer surface and the plane of polarization of the polarised light during the exposure. If the polarised light is elliptically polarized, the plane of polarization shall mean the plane defined by the incident direction of the light and by the major axis of the polarization ellipse.

The term polarised light direction is used in the context of the present invention not only to describe a direction for the duration of the exposure process, but also after exposure to refer to the direction of the polarised light on the alignment layer as it was applied during exposure.

The irradiation time is dependent upon the output of the individual lamps and can vary from a few seconds to several hours. Irradiation of the homogeneous layer can also be performed using filters that, for example, allow only certain wavelengths to pass, e.g., wavelengths suitable for inducing a cross-linking reaction.

The invention further relates to a liquid crystal alignment film obtained by the process of the invention.

The invention moreover relates to structured or unstructured optical and electro-optical elements and devices comprising the liquid crystal alignment film obtained by the process of the invention. Examples of structured or unstructured optical and electro-optical elements and devices include optical films, retarders, liquid-crystal displays (LCD), organic field-effect transistors (OFET), organic light-emitting diodes (OLED), smart windows and sensors.

The invention is described in more detail by the subsequent examples.

The following abbreviations were used:
- ¹H NMR:: ¹H nuclear magnetic resonance spectroscopy
m :multiplet, d : doublet, dd : doublet doublet, t : triplet, s : singulet, b : broad
- DMSO-d6:: deuterated dimethylsulfoxide
- MS:: mass spectroscopy
- ITO:: indium tin oxide
- IBIB:: isobutyl isobutyrate
- PTFE:: polytetrafluoroethylene
- MeOH:: methanol
- DMF:: N,N-dimethylformamide
- NMP:: N-methyl-2-pyrrolidone
- BL or GBL:: γ-butyrolactone
- DEE:: diethylene glycol diethyl ether
- EEP:: ethyl 3-ethoxypropionate
- BC:: ethylene glycol monobutyl ether (Butyl CELLOSOLVE^{™})
- MIBK:: methyl isobutyl ketone

4,9-Dioxatricyclo[5.3.0.02,6]decane-3,5,8,10-tetrone refers to the compound with CAS number 4415-87-6.
4,10-Dioxatricyclo[6.3.1.02,7]dodecane-3,5,9,11-tetrone refers to the compound with CAS number 6053-46-9.
4-(4-Aminophenoxy)-aniline refers to the compound with CAS number 101-80-4.
(trans,trans)-4'-(4,4,4-Trifluorobutyl)[1,1'-bicyclohexyl]-4-carboxylic acid refers to the compound with CAS number 1887749-09-8

### Methods

As described in detail below, varying compositions for forming liquid crystal alignments films were prepared and examined using the following methods. The inks were printed on 0.7 mm Kuramato polished soda glass/SiO₂(20 nm)/ITO(160 nm) substrates using an LP50 Suss Micro Tec inkjet printer, the setting parameters were adjusted to obtain a 107 nm coating thickness at the middle of the printed area. Heat treatment was performed for 50 sec at 25 °C, then 90 sec at 100 °C on a hot plate with distancing pins (6 mm height) and finally 10 min at 200 °C on a hot plate without pins.

### A. Viscosity

Viscosity was determined at 25 °C using a Brookfield Brookfield DV-II+pro viscometer.

### B. Surface Tension

Surface tension was determined at 20 °C using a Kibron AquaPi microtensiometer.

### C. Spreading

Spreading was determined by measuring the final dimension of the printed area after heat treatment with a ruler, in cross scan direction (perpendicular to the print direction). The printed width (40 mm) is subtracted, and the result is divided by 2 to give the spreading value in mm.

### D. Minimum Thickness in Border Area

Minimum thickness in the border area was determined using an Alpha-Step^{®} D-100 profiler (KLA-Tencor).

### Preparation of Monomers

### Preparation of (E)-3-[4-[4-(4,4,4-trifluorobutoxy)benzoyl]oxyphenyl]prop-2-enoic acid

19.5 g (164.1 mmol) of thionyl chloride were incrementally added to a suspension of 37.0 g (149.1 mmol) of 4-(4,4,4-trifluorobutoxy)benzoic acid in 100 mL of toluene and 0.8 mL of DMF over the course of 30 min at 70 °C. After 2 h at 75 °C, excess thionyl chloride was distilled off under pressure. The reaction mixture was subsequently cooled down to room temperature and 18.9 g (155.1 mmol) of 4-hydroxybenzaldehyde, 0.91 g (7.5 mmol) of 4-dimethylaminopyridine and 52.0 g (657.4 mmol) of pyridine were added.

After 2 h of agitation at room temperature, 26.53 g (254.9 mmol) of malonic acid and 7.3 g (102.6 mmol) of pyrrolidine were added and the reaction mixture was heated up to 80 °C. After 4 h at 80 °C, the reaction mixture was cooled down to 40 °C, 150 mL of MeOH were added and the reaction mixture was cooled down to 0 °C. After 1 h at 0 °C, the precipitate was filtered off, washed with 100 mL of cold methanol and dried under vacuum at 40°C to give 53.0 g (90%) of (E)-3-[4-[4-(4,4,4-trifluorobutoxy)benzoyl]oxyphenyl]prop-2-enoic acid as a white powder.

¹H NMR (300 MHz) in DMSO-D6: 12.40 (b, 1H), 8.08 (d, 2H), 7.79 (d, 2H), 7.63 (d, 1H), 7.32 (d, 2H), 7.14 (d, 2H), 6.54 (d, 1H), 4.17 (t, 2H), 2.45 (m, 2H), 1.98 (m, 2H).

### Preparation of (E)-3-[4-(4-pentylcyclohexanecarbonyl)oxyphenyl]prop-2-enoic acid

11.63 g (97.74 mmol) of thionyl chloride were incrementally added to a suspension of 17.62 g (88.86 mmol) of 4-pentylcyclohexanecarboxylic acid in 75 mL of toluene and 0.06 mL of DMF over the course of 30 min at 75°C. After 2 h at 75 °C, excess thionyl chloride was distilled off under pressure. The reaction mixture was subsequently cooled down to room temperature and 11.29 g (92.41 mmol) of 4-hydroxybenzaldehyde, 0.54 g (4.44 mmol) of 4-dimethylaminopyridine and 30.5 g (385.64 mmol) of pyridine were added.

After 2 h of agitation at room temperature, 15.81 g (151.95 mmol) of malonic acid and 3.22 g (45.32 mmol) of pyrrolidine were added and the reaction mixture was heated up to 80 °C. After 4 h at 80 °C, the reaction mixture was cooled down to 40 °C, 150 mL of MeOH were added and the reaction mixture was cooled down to 0 °C. After 1 h at 0 °C, the precipitate was filtered off, washed with 100 mL of cold methanol and dried under vacuum at 40 °C to give 24.5 g (80%) of (E)-3-[4-(4-pentylcyclohexanecarbonyl)oxyphenyl]prop-2-enoic acid as a white powder.

¹H NMR (300 MHz) in DMSO-D6: 12.37 (b, 1H), 7.73 (d, 2H), 7.59 (d, 1H), 7.14 (d, 2H), 6.50 (d, 1H), 2.50 (m, 1H), 2.08 (m, 2H), 1.80 (m, 2H), 1.5-0.7 (m, 13H), 0.85 (t, 3H).

### Preparation of (E)-3-[4-[4-(4-pentylcyclohexyl)cyclohexanecarbonyl]oxyphenyl]prop-2-enoic acid

11.63 g (97.74 mmol) of thionyl chloride were incrementally added to a suspension of 24.92 g (88.86 mmol) of 4-(4-pentylcyclohexyl)cyclohexanecarboxylic acid in 75 mL of toluene and 0.06 mL of DMF over the course of 30 min at 75 °C. After 2 h at 75 °C, excess thionyl chloride was distilled off under pressure. The reaction mixture was subsequently cooled down to room temperature and 11.29 g (92.41 mmol) of 4-hydroxybenzaldehyde, 0.54 g (4.44 mmol) of 4-dimethylaminopyridine and 30.5 g (385.64 mmol) of pyridine were added.

After 2 h of agitation at room temperature, 15.81 g (151.95 mmol) of malonic acid and 3.22 g (45.32 mmol) of pyrrolidine were added and the reaction mixture was heated up to 80 °C. After 4 h at 80 °C, the reaction mixture was cooled down to 40 °C, 150 mL of MeOH were added and the reaction mixture was cooled down to 0 °C. After 1 h at 0 °C, the precipitate was filtered off, washed with 100 mL of cold methanol and dried under vacuum at 40 °C to give 31.54 g (83%) of (E)-3-[4-[4-(4-pentylcyclohexyl)cyclohexanecarbonyl]oxyphenyl]-prop-2-enoic acid as a white powder.

¹H NMR (300 MHz) in DMSO-D6: 12.37 (b, 1H), 7.73 (d, 2H), 7.59 (d, 1H), 7.14 (d, 2H), 6.50 (d, 1H), 2.08 (m, 2H), 1.73 (m, 6H), 1.5-0.7 (m, 20H), 0.85 (t, 3H).

### Preparation of E)-3-[4-[4-[4-(4,4,4-trifluorobutyl)cyclohexyl]cyclohexanecarbonyl]-oxyphenyl]prop-2-enoic acid

2.82 g (23.69 mmol) of thionyl chloride were incrementally added to a suspension of 6.90 g (21.54 mmol) of (trans,trans)-4'-(4,4,4-Trifluorobutyl)[1,1'-bicyclohexyl]-4-carboxylic acid in 18 mL of toluene and 0.06 mL of DMF over the course of 30 min at 75 °C. After 2 h at 75 °C, excess thionyl chloride was distilled off under pressure. The reaction mixture was subsequently cooled down to room temperature and 2.74 g (22.40 mmol) of 4-hydroxybenzaldehyde, 0.13 g (1.08 mmol) of 4-dimethylaminopyridine and 7.39 g (93.43 mmol) of pyridine were added.

After 2 h of agitation at room temperature, 3.83 g (36.83 mmol) of malonic acid and 0.78 g (10.98 mmol) of pyrrolidine were added and the reaction mixture was heated up to 80 °C. After 4 h at 80 °C, the reaction mixture was cooled down to 40 °C, 150 mL of MeOH were added and the reaction mixture was cooled down to 0 °C. After 1 h at 0 °C, the precipitate was filtered off, washed with 100 mL of cold methanol. The solid is suspended in a mixture of 18 mL of MeOH, 6 mL of water and 3 g of a 25% HCL solution. After 2 hours of agitation, the solid is filtered off, washed with MeOH, water and heptane and dried 48h at 40°C to give 4.90 g (48.7%) of (E)-3-[4-[4-[4-(4,4,4-trifluorobutyl)cyclohexyl]cyclohexanecarbonyl]-oxyphenyl]prop-2-enoic acid as a white powder.

¹H NMR (300 MHz) in DMSO-D6: 12.38 (s, 1H), 7.73 (d, 2H), 7.59 (d, 1H), 7.14 (d, 2H), 6.50 (d, 1H), 2.91 (m, 1H), 2.3 (m, 3H), 1.73-0.7 (m, 22H).

### Preparation of [4-[(E)-3-[2-(2,4-dinitrophenyl)ethoxy]-3-oxo-prop-1-enyl]phenyl] 4-(4,4,4-trifluorobutoxy)benzoate

2.50 g (11.8 mmol) of 2-(2,4-dinitrophenyl)ethanol, 4.65 g (11.8 mmol) of (E)-3-[4-[4-(4,4,4-trifluorobutoxy)benzoyl]oxyphenyl]prop-2-enoic acid, and 144 mg (1.2 mmol) of 4-Dimethylaminopyridine were dissolved in 30 mL of dichloromethane. 2.48 g (13.0 mmol) of N-(3-Dimethylaminopropyl)-N'-ethylcarbodiimide hydrochloride (EDC hydrochloride) were added at 0 °C. The solution was stirred for 1 h at 0 °C and subsequently stirred at room temperature overnight.

After 22 h at room temperature, the reaction mixture was partitioned between dichloromethane and water. The organic phase was washed repeatedly with water, dried over sodium sulfate, filtered, and concentrated by rotary evaporation. Chromatography of the residue was carried out on silica gel using toluene:ethyl acetate (95:5) as eluant. Crystallization from an ethyl acetate:hexane (1:1) mixture yielded 5.21 g (75%) of [4-[(E)-3-[2-(2,4-dinitrophenyl)ethoxy]-3-oxo-prop-1-enyl]phenyl] 4-(4,4,4-trifluorobutoxy)benzoate as colorless crystals.

¹H NMR (300 MHz) in DMSO-D6: 8.74 (d, 1H), 8.51 (dd, 1H), 8.09 (dd, 2H), 7.93 (d, 1H), 7.80 (d, 2H), 7.65 (d, 1H), 7.34 (d, 2H),7.14 (d, 2H), 6.55 (d, 1H), 4.47 (t, 2H), 4.17 (t, 2H), 2.45 (m, 2H), 2.00 (m, 2H).

### Preparation of [4-[(E)-3-[2-(2,4-dinitrophenyl)ethoxy]-3-oxo-prop-1-enyl]phenyl] 4-pentylcyclohexanecarboxylate

2.50 g (11.8 mmol) of 2-(2,4-dinitrophenyl)ethanol, 4.06 g (11.8 mmol) of (E)-3-[4-(4-pentylcyclohexanecarbonyl)oxyphenyl]prop-2-enoic acid, and 144 mg (1.2 mmol) of 4-dimethylaminopyridine were dissolved in 30 mL of dichloromethane. 2.48 g (13.0 mmol) of N-(3-dimethylaminopropyl)-N'-ethylcarbodiimide hydrochloride (EDC hydrochloride) were added at 0 °C. The solution was stirred for 1 h at 0 °C and subsequently stirred at room temperature overnight.

After 22 h at room temperature, the reaction mixture was partitioned between dichloromethane and water. The organic phase was washed repeatedly with water, dried over sodium sulfate, filtered, and concentrated by rotary evaporation. Chromatography of the residue was carried out on silica gel using toluene:ethyl acetate (95:5) as eluant. Crystallization from an ethylacetate:hexane (1:1) mixture yielded 4.44 g (70%) of [4-[(E)-3-[2-(2,4-dinitrophenyl)ethoxy]-3-oxo-prop-1-enyl]phenyl]4-pentylcyclohexanecarboxylate as colorless crystals.

¹H NMR (300 MHz) in DMSO-D6: 8.73 (d, 1H), 8.51 (dd, 1H), 7.92 (d, 1H), 7.75 (d, 2H), 7.60 (d, 1H), 7.15 (d, 2H), 6.51 (d, 1H), 4.47 (t, 2H), 3.38 (t, 2H), 2.5 (m, 1H), 2.1 (m, 2H), 1.8 (m, 2H), 1.5-0.7 (m, 13H), 0.85 (t, 3H).

### Preparation of [4-[(E)-3-[2-(2,4-dinitrophenyl)ethoxy]-3-oxo-prop-1-enyl]phenyl] 4-(4-pentylcyclohexyl)cyclohexanecarboxylate

2.50 g (11.8 mmol) of 2-(2,4-dinitrophenyl)ethanol, 5.03 g (11.8 mmol) of (E)-3-[4-[4-(4-pentylcyclohexyl)cyclohexanecarbonyl]oxyphenyl]prop-2-enoic acid, and 144 mg (1.2 mmol) of 4-dimethylaminopyridine were dissolved in 30 mL of dichloromethane. 2.48 g (13.0 mmol) of N-(3-dimethylaminopropyl)-N'-ethylcarbodiimide hydrochloride (EDC hydrochloride) were added at 0 °C. The solution was stirred for 1 h at 0 °C and subsequently allowed to stir at room temperature overnight.

After 22 h at room temperature, the reaction mixture was partitioned between dichloromethane and water. The organic phase was washed repeatedly with water, dried over sodium sulfate, filtered, and concentrated by rotary evaporation. Chromatography of the residue was carried out on silica gel using toluene:ethyl acetate (95:5) as eluant. Crystallization from an ethylacetate:hexane (1:1) mixture yielded 5.49 g (75%) of [4-[(E)-3-[2-(2,4-dinitrophenyl)ethoxy]-3-oxo-prop-1-enyl]phenyl] 4-(4-pentylcyclohexyl)cyclohexanecarboxylate as colorless crystals.

¹H NMR (300 MHz) in DMSO-D6: 8.74 (d, 1H), 8.51 (dd, 1H), 7.92 (d, 1H), 7.75 (d, 2H), 7.61 (d, 1H), 7.16 (d, 2H), 6.52 (d, 1H), 4.46 (t, 2H), 3.38 (t, 2H), 2.1 (m, 2H), 1.7 (m, 6H), 1.5-0.7 (m, 20H), 0.85 (t, 3H).

### Preparation of [4-[(E)-3-[2-(2,4-diaminophenyl)ethoxy]-3-oxo-prop-1-enyl]phenyl] 4-(4,4,4-trifluorobutoxy)benzoate

4.93 g (8.38 mmol) of ([4-[(E)-3-[2-(2,4-dinitrophenyl)ethoxy]-3-oxo-prop-1-enyl]phenyl] 4-(4,4,4-trifluorobutoxy)benzoate were dissolved in a mixture of 54 mL of N,N-dimethylformamide and 6 mL of water. 13.9 g (51.4 mmol) ferric chloride hexahydrate were added. 5.60 g (85.7 mmol) of zinc powder were added incrementally over the course of 60 min. The mixture was allowed to react for 2 h. The reaction mixture was then partitioned between ethyl acetate and water and filtered. The organic phase was washed repeatedly with water, dried over sodium sulfate, filtered, and concentrated by rotary evaporation. Filtration of the residue on silica gel using toluene:ethyl acetate (1:3) as eluant and crystallization from ethylacetate:hexane (1:1) yielded 3.20 g (72 %) of [4-[(E)-3-[2-(2,4-diaminophenyl)ethoxy]-3-oxo-prop-1-enyl]phenyl] 4-(4,4,4-trifluorobutoxy)benzoate as orange powder.

¹H NMR (300 MHz) in DMSO-D6: 8.10 (d, 2H), 7.83 (d, 2H), 7.70 (d, 1H), 7.34 (d, 2H), 7.15 (d, 2H), 6.64 (m, 1H+1H), 5.90 (m, 1H), 5.80 (m, 1H), 4.66 (m, 2H), 4.58 (m, 2H) 4.18 (m, 2H+2H), 2.70 (t, 2H), 2.47 (m, 2H), 2.01 (m, 2H).

### Preparation of [4-[(E)-3-[2-(2,4-diaminophenyl)ethoxy]-3-oxo-prop-1-enyl]phenyl] 4-pentylcyclohexanecarboxylate

4.51 g (8.38 mmol) of [4-[(E)-3-[2-(2,4-dinitrophenyl)ethoxy]-3-oxo-prop-1-enyl]phenyl] 4-pentylcyclohexanecarboxylate were dissolved in a mixture of 54 mL of N,N-dimethylformamide and 6 mL of water. 13.9 g (51.4 mmol) of ferric chloride hexahydrate were added. 5.60 g (85.7 mmol) of zinc powder were incrementally added over the course of 60 min. The mixture was allowed to react for 2 h.

The reaction mixture was subsequently partitioned between ethyl acetate and water, and filtered. The organic phase was washed repeatedly with water, dried over sodium sulfate, filtered, and concentrated by rotary evaporation. Filtration of the residue on silica gel using toluene:ethyl acetate (1:3) as eluant and crystallization from ethylacetate:hexane (1:1) yielded 2.88 g (72 %) of [4-[(E)-3-[2-(2,4-diaminophenyl)ethoxy]-3-oxo-prop-1-enyl]phenyl] 4-pentylcyclohexanecarboxylate as yellow powder.

¹H NMR (300 MHz) in DMSO-D6: 7.77 (d, 2H), 7.65 (d, 1H), 7.15 (d, 2H), 6.60 (m, 1H+1H), 5.89 (d, 1H), 5.79 (dd, 1H), 4.64 (s, 2H), 4.58 (s, 2H), 4.17 (t, 2H), 2.68 (t, 2H), 2.50 (m, 1H), 2.06 (m, 2H), 1.65 (m, 2H), 1.6-0.8 (m, 13H), 0.86 (t, 3H).

### Preparation of [4-[(E)-3-[2-(2,4-diaminophenyl)ethoxy]-3-oxo-prop-1-enyl]phenyl] 4-(4-pentylcyclohexyl)cyclohexanecarboxylate

5.20 g (8.38 mmol) of [4-[(E)-3-[2-(2,4-dinitrophenyl)ethoxy]-3-oxo-prop-1-enyl]phenyl] 4-(4-pentylcyclohexyl)cyclohexanecarboxylate were dissolved in a mixture of 54 mL of N,N-dimethylformamide and 6 mL of water. 13.9 g (51.4 mmol) of ferric chloride hexahydrate were added. 5.60 g (85.7 mmol) of zinc powder were incrementally added over the course of 60 min. The mixture was allowed to react for 2 h.

The reaction mixture was subsequently partitioned between ethyl acetate and water, and filtered. The organic phase was washed repeatedly with water, dried over sodium sulfate, filtered, and concentrated by rotary evaporation. Filtration of the residue on silica gel using toluene:ethyl acetate (1:3) as eluant and crystallization from ethylacetate:hexane (1:1) yielded 3.06 g (65 %) of [4-[(E)-3-[2-(2,4-diaminophenyl)ethoxy]-3-oxo-prop-1-enyl]phenyl] 4-(4-pentylcyclohexyl)cyclohexanecarboxylate as yellow-orange powder.

¹H NMR (300 MHz) in DMSO-D6: 7.76 (d, 2H), 7.65 (d, 1H), 7.14 (m, 2H), 6.59 (m, 1H+1H), 5.89 (m, 1H), 5.80 (m, 1H), 4.64 (s, 2H), 4.57 (s, 2H), 4.17 (t, 2H), 3.38 (t, 2H), 2.1 (m, 2H), 1.7 (m, 6H), 1.5-0.7 (m, 20H), 0.85 (t, 3H).

### Preparation of [4-[(E)-3-[[5-nitro-2-[4-nitro-2-[[(E)-3-[4-[4-(4,4,4-trifluorobutoxy)benzoyl]-oxyphenyl]prop-2-enoyl]oxymethyl]phenyl]phenyl]methoxy]-3-oxo-prop-1-enyl]phenyl] 4-(4,4,4-trifluorobutoxy)benzoate

3.92 g (12.8 mmol) of 2,2'-bis(hydroxymethyl-4,4'-Dinitro 1,1-biphenyl, 13.20 g (33.5 mmol) of (E)-3-[4-[4-(4,4,4-trifluorobutoxy)benzoyl]oxyphenyl]prop-2-enoic acid, and 0.630 mg (5.15 mmol) of 4-dimethylaminopyridine were dissolved in 200 mL of dichloromethane. 6.91 g (11.16 mmol) of N,N'-dicyclohexylcarbodiimide were added at 0 °C. The solution was stirred for 2 h at 0 °C and subsequently stirred at room temperature overnight.

After 22 h at room temperature, the reaction mixture was partitioned between dichloromethane and water. The organic phase was washed repeatedly with water, dried over sodium sulphate, filtered and concentrated by rotary evaporation. Chromatography of the residue on 150 g silica gel using toluene:ethyl acetate (9:1) as eluant yielded 12.0 g [4-[(E)-3-[[5-nitro-2-[4-nitro-2-[[(E)-3-[4-[4-(4,4,4-trifluorobutoxy)benzoyl]oxyphenyl]prop-2-en-oyl]oxymethyl]phenyl]phenyl]methoxy]-3-oxo-prop-1-enyl]phenyl] 4-(4,4,4-trifluorobutoxy)-benzoate as white crystals.
MS: 1074.2 M+NH₄⁺, 1079.2 M+Na⁺

### Preparation [4-[(E)-3-[[5-amino-2-[4-amino-2-[[(E)-3-[4-[4-(4,4,4-trifluorobutoxy)benzoyl]oxyphenyl]prop-2-enoyl]oxymethyl]phenyl]phenyl]methoxy]-3-oxo-prop-1-enyl]phenyl] 4-(4,4,4-trifluorobutoxy)benzoate

2.27 g (2.14 mol) of [4-[(E)-3-[[5-nitro-2-[4-nitro-2-[[(E)-3-[4-[4-(4,4,4-trifluorobutoxy)-benzoyl]oxyphenyl]prop-2-enoyl]oxymethyl]phenyl]phenyl]methoxy]-3-oxo-prop-1-enyl]-phenyl] 4-(4,4,4-trifluorobutoxy)benzoate were dissolved in a mixture of 40 mL of N,N-dimethylformamide and 3 mL of water. 3.48 g (12.8 mmol) ferric chloride hexahydrate were added. 1.40 g (21.4 mmol) of zinc powder were added incrementally over the course of 40 min. The mixture was allowed to react for 2 h.

The reaction mixture was then partitioned between ethyl acetate and water and filtered. The organic phase was washed repeatedly with water, dried over sodium sulfate, filtered and concentrated by rotary evaporation. Chromatography of the residue on 100 g silica gel using toluene:ethyl acetate (7:3) as eluant yielded 1.74 g [4-[(E)-3-[[5-amino-2-[4-amino-2-[[(E)-3-[4-[4-(4,4,4-trifluorobutoxy)benzoyl]oxyphenyl]prop-2-enoyl]oxymethyl]phenyl]phenyl]-methoxy]-3-oxo-prop-1-enyl]phenyl] 4-(4,4,4-trifluorobutoxy)benzoate as yellowish crystals.
MS: 997.4 MH⁺, 1014.4 M+NH₄⁺

### Preparation of Polymers

Polymers were synthesized by solution polycondensation of diamines or a mixture of diamines with dianhydrides or a mixture of dianhydrides. The polymer formation is characterized by an increase of the viscosity of the reaction mixture. An inherent viscosity > 0.1 dL/g attests the formation of the polymer main chain.

### Polymer PX1

4.897 g (24.970 mmol) of 4,9-dioxatricyclo[5.3.0.02,6]decane-3,5,8,10-tetrone were added to a solution of 5.000 g (24.970 mmol) of 4-(4-aminophenoxy) aniline in 39.59 g of NMP. Stirring was then carried out at 0 °C for 2 h. The mixture was subsequently allowed to react for 72 hours at room temperature. Polymer PX1 was obtained as a solution (20 wt. %) in NMP with an inherent viscosity η of 0.48 dL/g.

### Polymer PX2

5.284 g (23.570 mmol) of 4,10-dioxatricyclo[6.3.1.02,7]dodecane-3,5,9,11-tetrone is added to a solution of 5.000 g (23.570 mmol) of 4-(4-amino-2-methyl-phenyl)-3-methylaniline in 41.14 g of NMP. Stirring is then carried out at 0°C for 2 hours. The mixture is subsequently allowed to react for 72 hours at room temperature. Polyamic acid PX2 is obtained as 20 wt% NMP-solution with an inherent viscosity η of 0.47dL/g

### Polymer P1

0.840 g (3.74 mmol) of 4,10-dioxatricyclo[6.3.1.02,7]dodecane-3,5,9,11-tetrone were added to a solution of 2.000 g (3.78 mmol) of [4-[(E)-3-[2-(2,4-diaminophenyl)ethoxy]-3-oxo-prop-1-enyl]phenyl] 4-(4,4,4-trifluorobutoxy)benzoate and 0.038 g (0.03 mmol) of [4-[(E)-3-[[5-amino-2-[4-amino-2-[[(E)-3-[4-[4-(4,4,4-trifluorobutoxy)benzoyl]oxyphenyl]prop-2-enoyl]-oxymethyl]phenyl]phenyl]methoxy]-3-oxo-prop-1-enyl]phenyl] 4-(4,4,4-trifluorobutoxy)-benzoate in 6.733 g of NMP. Stirring was then carried out at 0 °C for 2 h. The mixture was subsequently allowed to react for 72 h at room temperature. Polymer P1 was obtained as a solution (30 wt. %) in NMP with an inherent viscosity η of 0.27 dL/g.

### Polymer P2

0.364 g (1.85 mmol) of 4,9-dioxatricyclo[5.3.0.02,6]decane-3,5,8,10-tetrone and 0.424 g (1.89 mmol) of 4,10-dioxatricyclo[6.3.1.02,7]dodecane-3,5,9,11-tetrone were added to a solution of 2.000 g (3.78 mmol) of [4-[(E)-3-[2-(2,4-diaminophenyl)ethoxy]-3-oxo-prop-1-enyl]phenyl] 4-(4,4,4-trifluorobutoxy)benzoate in 6.514 g of NMP. Stirring was then carried out at 0 °C for 2 h. The mixture was subsequently allowed to react for 48 h at room temperature. Polymer P2 was obtained as a solution (30 wt. %) in NMP with an inherent viscosity η of 0.42 dL/g.

### Polymer P3

0.468 g (2.08 mmol) of 4,10-dioxatricyclo[6.3.1.02,7]dodecane-3,5,9,11-tetrone were added to a solution of 0.828 g (1.56 mmol) of [4-[(E)-3-[2-(2,4-diaminophenyl)ethoxy]-3-oxo-prop-1-enyl]phenyl] 4-(4,4,4-trifluorobutoxy)benzoate, and 0.250 g (0.52 mmol) of [4-[(E)-3-[2-(2,4-diaminophenyl)ethoxy]-3-oxo-prop-1-enyl]phenyl] 4-pentylcyclohexanecarboxylate, in 3.60 g of NMP. Stirring was then carried out at 0 °C for 2 hours. The mixture was subsequently allowed to react for 72 h at room temperature. Polymer P3 was obtained as a solution (30 wt.-%) in NMP with an inherent viscosity η of 0.35 dL/g.

### Polymer P4

0.499 g (2.22 mmol) of 4,10-dioxatricyclo[6.3.1.02,7]dodecane-3,5,9,11-tetrone was added to a solution of 1.000 g (1.89 mmol) of [4-[(E)-3-[2-(2,4-diaminophenyl)ethoxy]-3-oxo-prop-1-enyl]phenyl] 4-(4,4,4-trifluorobutoxy)benzoate, and 0.187 g (0.33 mmol) of [4-[(E)-3-[2-(2,4-diaminophenyl)ethoxy]-3-oxo-prop-1-enyl]phenyl] 4-(4-pentylcyclohexyl)cyclohexanecarboxylate, in 3.93 g of NMP. Stirring was then carried out at 0°C for 2 hours. The mixture was subsequently allowed to react for 72 h at room temperature. Polymer P4 was obtained as a solution (30 wt.-%) in NMP with an inherent viscosity η of 0.41 dL/g.

### Polymer P5

50.00 g (0.20 mol) of 2-(3,4-Epoxycyclohexyl)ethyl]trimethoxysilane, 5.00 g (0.05 mol) of triethylamine in 250g of MIBK are heated reflux. 50.00 g (2.77 mol) of deionized water is added dropwise in 30 min to the mixture. After 6 hours of agitation at 80°C, the reaction mixture is cooled down to room temperature, the organic layer is extracted, washed 3 times with deionized water and the solvent is removed under pressure to give poly[2-(3,4-Epoxycyclohexyl)ethyl]trimethoxysilane] P5 as viscous oil. GPC (MW= 2.5 kDa).

### Polymer P6

2.94 g (13.6 mmol) of Polymer P5, 1.61 g (4.08 mmol) of (E)-3-[4-[4-(4,4,4-trifluorobutoxy)benzoyl]oxyphenyl]prop-2-enoic acid, 0.132 g (0.41 mmol) of tetrabutylammonium bromide, in 19 mL of MIBK are heated up to 110°C. After 12 hours of agitation at 110°C, the reaction mixture is cooled down to room temperature and MIBK is removed under vacuum. The residue is re-dissolved in 100 mL of ethyl acetate and washed 3 times with deionized water. The solvent is removed under vacuum to give Polymer P6 as off-white powder. GPC (MW= 14.3 kDa).

### Polymer P7

1.00 g (4.62 mmol) of Polymer P5, 0.215 g (0.46 mmol) of (E)-3-[4-[4-[4-(4,4,4-trifluorobutyl)cyclohexyl]cyclohexanecarbonyl]oxyphenyl]prop-2-enoic acid, 0.493 g (1.16 mmol) of (E)-3-[4-[4-(4-pentylcyclohexyl)cyclohexanecarbonyl] oxyphenyl]prop-2-enoic acid, 0.022 g (0.07 mmol) of tetrabutylammonium bromide, in 10 mL of MIBK are heated up to 110°C. After 12 hours of agitation at 110°C, the reaction mixture is cooled down to room temperature and MIBK is removed under vacuum. The residue is re-dissolved in 100 mL of ethyl acetate and washed 3 times with deionized water. The organic layer is removed under pressure to give Polymer P7 as off-white powder. GPC (16.7kDa).

Solutions were prepared by dissolving polymeric materials in solvent mixtures as specified in the following.

### Solution 1

In a 30 mL plastic flask, 0.739 g P1 and 10.142 g of PX1 were mixed with 3.312 g of NMP. 11.936 g of GBL; 19.098 g of BC; and 4.774 g of DEE were added subsequently. The solution was strongly stirred at room temperature for 10 min and filtered through coupled Sartorius filters (0.45 µm and 0.20 µm).

### Solutions 2 to 7

Solutions 2 to 7 were obtained analogously to Solution 1, using the following polymers and solvents.

| | |
|---|---|
| Solution 2: | 0.591 g P1 and 8.113 g of PX1, mixed with 4.556 g of NMP; 11.468 g of GBL; 11.461 g of BC; and 3.821 g of DEE |
| Solution 3: | 0.901 g P2 and 7.65 g of PX1, mixed with 4.714 g of NMP; 11.459 g of GBL; 11.462 g of BC; and 3.821 g of DEE |
| Solution 4: | 0.800 g P2 and 6.80 g of PX1, mixed with 5.527 g of NMP; 11.524 g of GBL; 11.522 g of BC; and 3.827 g of DEE |
| Solution 5: | 0.592 g P1 and 8.113 g of PX1, mixed with 4.557 g of NMP; 11.462 g of GBL; 11.462 g of BC; and 3.82 g of EEP |
| Solution 6: | 0.533 g P3 and 7.201 g of PX1, mixed with 5.387 g of NMP; 11.521 g of GBL; 11.520 g of BC; and 3.84 g of DEE |
| Solution 7: | 0.400 g P4 and 7.40 g of PX1, mixed with 5.320 g of NMP; 11.521 g of GBL; 11.521 g of BC; and 3.843 g of DEE |
| Solution 8: | 0.800 g P2 and 6.805 g of PX2, mixed with 5.517 g of NMP; 11.520 g of GBL; 11.462 g of BC; and 3.842 g of DEE. |
| Solution 9: | 0.400 g P6 and 7.601 g of PX1, mixed with 5.121 g of NMP; 11.522 g of GBL; 11.522 g of BC; and 3.840 g of DEE. |
| Solution 10: | 0.016 g P7 and 7.920 g of PX1, mixed with 5.185 g of NMP; 11.520 g of GBL; 9.60 g of BC; and 5.761 g of DEE. |

| Solution | Solids content [wt.-%] | Polymers (weight ratio) | Solvent Mixture (weight ratio) |
|---|---|---|---|
| 1 * | 4.5 | PX1 and P1 (90.15 : 9.85) | NMP : BL : DEE : EEP (25 : 25 : 40: 10) |
| 2 | 4.5 | PX1 and P1 (90.15 : 9.85) | NMP : BL : BC : DEE (30: 30 : 30 : 10) |
| 3 | 4.5 | PX1 and P2 (85: 15) | NMP : BL : BC : DEE (30: 30 : 30 : 10) |
| 4 | 4 | PX1 and P2 (85: 15) | NMP : BL : BC : DEE (30: 30 : 30 : 10) |
| 5 * | 4.5 | PX1 and P1 (90.15 : 9.85) | NMP : BL : BC : EEP (30 : 30 : 30 : 10) |
| 6 | 4 | PX1 and P3 (90 : 10) | NMP : BL : BC : DEE (30: 30 : 30 : 10) |
| 7 | 4 | PX1 and P4 (92.5 : 7.5) | NMP : BL : BC : DEE (30: 30 : 30 : 10) |
| 8 | 4 | PX2 and P2 (85:15) | NMP : BL : BC : DEE (30: 30 : 30 : 10) |
| 9 | 4 | PX1 and P6 (95:5) | NMP : BL : BC : DEE (30: 30 : 30 : 10) |
| 10 | 4 | PX1 and P7 (99:1) | NMP : BL : BC : DEE (30: 30 : 25 : 15) |

| | | | |
|---|---|---|---|
| * comparative example | | | |

The solutions were examined according to the methods described above. The results are shown in the following table.

| # | Viscosity [cP] | Surface Tension [mN/m] | Spreading [mm] | Minimum Thickness in Border Area (Ratio [%]) ** | Film Uniformity *** |
|---|---|---|---|---|---|
| 1 * | 9 | 31.5 | 0.7 to 0.9 | 75 nm (70%) | + |
| 2 | 10 | 33.1 | 0.4 to 0.6 | 90 nm (84%) | + |
| 3 | 11 | 33.2 | 0.3 to 0.5 | 89 nm (83%) | + |
| 4 | 9 | 33.2 | 0.3 to 0.5 | 92 nm (86%) | + |
| 5* | 11 | 33.1 | 0.2 to 0.4 | 89 nm (83%) | - |
| 6 | 9 | 33.0 | 0.4 to 0.5 | 91 nm (85%) | + |
| 7 | 9 | 33.1 | 0.4 to 0.5 | 95 nm (88%) | + |
| 8 | 8 | 33.4 | 0.4-0.5 | 90 nm (84%) | + |
| 9 | 9 | 33.3 | 0.3-0.4 | 91 nm (85%) | + |
| 10 | 9 | 33.4 | 0-0.1 | 102 nm (95%) | + |

| | | | | | |
|---|---|---|---|---|---|
| * comparative example ** average thickness: 107 nm *** + indicates that no visual unevenness was observed - indicates that visual unevenness was observed | | | | | |

The variations in the thickness of the films were within ± 3 nm for each film. It is evident that the compositions of the invention allow for a uniform liquid crystal alignment film without visual unevenness, and that the compositions exhibit reduced spreading and increased minimum thickness in comparison to the comparative examples.

## Claims

1. A composition for forming a liquid crystal alignment film, comprising:
- a photoalignable polymeric material for forming a liquid crystal alignment film which has a side chain comprising a photoalignable group; and
- a solvent mixture comprising, relative to the weight of the solvent mixture, (i) at least one of an N-alkyl pyrrolidone and a lactone in a total amount of 45 to 70 wt.-%; (ii) a diethylene glycol dialkyl ether in an amount of 5 to 15 wt.-%; and (iii) an ethylene glycol monoalkyl ether in an amount so as to add up to 100 wt.-% of the solvent mixture;
the composition having a solids content of 3.0 to 6.0% by weight.

2. The composition of claim 1, wherein the solvent mixture comprises both an N-alkyl pyrrolidone and a lactone.

3. The composition of claim 2, wherein the solvent mixture comprises, relative to the weight of the solvent mixture, 20 to 40 wt.-% of the N-alkyl pyrrolidone and 20 to 40 wt.-% of the lactone, with the proviso that the amounts of the N-alkyl pyrrolidone and the lactone add up to 45 to 70 wt.-%.

4. The composition according to any one of the preceding claims, wherein the N-alkyl pyrrolidone is N-methyl pyrrolidone, the lactone is γ-butyrolactone, the ethylene glycol monoalkyl ether is ethylene glycol monobutyl ether, and the diethylene glycol dialkyl ether is diethylene glycol diethyl ether.

5. The composition according to any one of the preceding claims, wherein the photoalignable group is selected cinnamates and chalcones; coumarines and quinolones; stilbenes and cyanostilbenes; azo groups; chromones and chromenes; mono- and di-acetylene groups such as diphenylacetylene group; benzylidenephtalimide group, benzylideneacetophene group, phenylenediacryloyl group; wherein the photoalignable group is optionally substituted.

6. The composition according to any one of the preceding claims, wherein the side chain, in addition to the photoalignable group(s), further comprises one or more of an aromatic or an alicyclic group.

7. The composition according to any one of the preceding claims, wherein the backbone of the photoalignable polymeric material is selected from polyamic acids, polyimides, polyamides, polysiloxanes, polymaleimides and polyacrylates.

8. The composition according to any one of the preceding claims, wherein the polymeric material for forming a liquid crystal alignment film is obtained by polymerizing at least one diamine with an acid dianhydride, wherein at least a portion of the diamine has at least one photoalignable group.

9. The composition according to claim 8, wherein the polymeric material for forming a liquid crystal alignment comprises repeating units represented by formula (1) 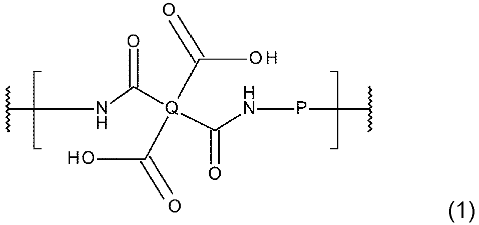 wherein
Q is a tetravalent residue of a tetracarboxylic dianhydride; and
P is a divalent residue of a diamine, wherein at least a portion of P carries a side chain comprising a photoalignable group.

10. The composition according to any one of the preceding claims, containing an additional polymeric material.

11. A process for forming a liquid crystal alignment film, comprising:
- applying a composition according to claim 1 onto a substrate;
- drying the wet film thus obtained, and
- irradiating the dried film to impart liquid crystal alignment capability.

12. A liquid crystal alignment film obtained by the process of claim 11.

13. Structured or unstructured optical and electro-optical elements and devices comprising the liquid crystal alignment film according to claim 12.

## Patentansprüche

1. Zusammensetzung zum Bilden einer Flüssigkristallausrichtungsschicht, umfassend:
- ein photoausrichtbares Polymermaterial zum Bilden einer Flüssigkristallausrichtungsschicht, das eine Seitenkette aufweist, umfassend eine photoausrichtbare Gruppe; und
- eine Lösungsmittelmischung, umfassend, relativ zum Gewicht der Lösungsmittelmischung, (i) mindestens eines von einem N-Alkylpyrrolidon und einem Lacton in einer Gesamtmenge von 45 bis 70 Gewichts-%; (ii) einen Diethylenglykoldialkylether in einer Menge von 5 bis 15 Gewichts-%; und (iii) einen Ethylenglykolmonoalkylether in einer Menge, die 100 Gewichts-% der Lösungsmittelmischung ergibt;
wobei die Zusammensetzung einen Feststoffgehalt von 3,0 bis 6,0 Gewichts-% aufweist.

2. Zusammensetzung nach Anspruch 1, wobei die Lösungsmittelmischung sowohl ein N-Alkylpyrrolidon als auch einen Lacton umfasst.

3. Zusammensetzung nach Anspruch 2, wobei die Lösungsmittelmischung relativ zum Gewicht der Lösungsmittelmischung 20 bis 40 Gewichts-% des N-Alkylpyrrolidons und 20 bis 40 Gewichts-% des Lactons umfasst, mit der Maßgabe, dass die Mengen des N-Alkylpyrrolidons und des Lactons zusammen 45 bis 70 Gewichts-% ergeben.

4. Zusammensetzung nach einem der vorhergehenden Ansprüche, wobei das N-Alkylpyrrolidon N-Methylpyrrolidon ist, das Lacton γ-Butyrolacton ist, der Ethylenglykolmonoalkylether Ethylenglykolmonobutylether ist und der Diethylenglykoldialkylether Diethylenglykoldiethylether ist.

5. Zusammensetzung nach einem der vorhergehenden Ansprüche, wobei die photoausrichtbare Gruppe ausgewählt ist aus Cinnamaten und Chalkonen; Cumarinen und Chinolonen; Stilbenen und Cyanostilbenen; Azo-Gruppen; Chromonen und Chromenen; Mono- und Diacetylengruppen wie zum Beispiel die Diphenylacetylengruppe; Benzylidenftalimidgruppe, Benzylidenacetophengruppe, Phenylendiacryloylgruppe; wobei die photoausrichtbare Gruppe optional substituiert ist.

6. Zusammensetzung nach einem der vorhergehenden Ansprüche, wobei die Seitenkette zusätzlich zu der/den photoausrichtbaren Gruppe(n) ferner eine oder mehrere einer aromatischen oder einer alicyclischen Gruppe umfasst.

7. Zusammensetzung nach einem der vorhergehenden Ansprüche, wobei das Grundgerüst des photoausrichtbaren Polymermaterials ausgewählt ist aus Polyamidsäuren, Polyimiden, Polyamiden, Polysiloxanen, Polymaleimiden und Polyacrylaten.

8. Zusammensetzung nach einem der vorhergehenden Ansprüche, wobei das Polymermaterial zum Bilden einer Flüssigkristallausrichtungsschicht durch Polymerisation mindestens eines Diamins mit einem Säuredianhydrid erhalten wird, wobei mindestens ein Teil des Diamins mindestens eine photoausrichtbare Gruppe aufweist.

9. Zusammensetzung nach Anspruch 8, wobei das Polymermaterial zum Bilden einer Flüssigkristallausrichtung sich wiederholende Einheiten umfasst, dargestellt durch die Formel (1) 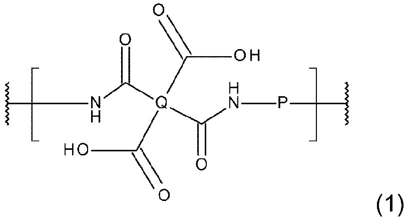 wobei
Q ein vierwertiger Rest eines Tetracarbonsäuredianhydrids ist; und
P ein zweiwertiger Rest eines Diamins ist, wobei mindestens ein Teil von P eine Seitenkette trägt, die eine photoausrichtbare Gruppe umfasst.

10. Zusammensetzung nach einem der vorhergehenden Ansprüche, die ein zusätzliches Polymermaterial enthält.

11. Prozess zum Bilden einer Flüssigkristallausrichtungsschicht, umfassend:
- Anwenden einer Zusammensetzung nach Anspruch 1 auf ein Substrat;
- Trocknen der so erhaltenen nassen Schicht, und
- Bestrahlen der getrockneten Schicht, um ihr die Fähigkeit zur Flüssigkristallausrichtung zu verleihen.

12. Flüssigkristallausrichtungsschicht, die durch den Prozess nach Anspruch 11 erhalten wird.

13. Strukturierte oder unstrukturierte optische und elektrooptische Elemente und Vorrichtungen, umfassend die Flüssigkristallausrichtungsschicht nach Anspruch 12.

## Revendications

1. Composition de formation d'un film d'alignement de cristaux liquides, comprenant :
- un matériau polymère photoalignable destiné à former un film d'alignement de cristaux liquides qui présente une chaîne latérale comprenant un groupe photoalignable ; et
- un mélange de solvants comprenant, par rapport au poids du mélange de solvants, (i) au moins l'une parmi une N-alkylpyrrolidone et une lactone dans une quantité totale de 45 à 70 % en poids ; (ii) un éther dialkylique de diéthylène glycol en une quantité de 5 à 15 % en poids ; et (iii) un éther monoalkylique d'éthylène glycol en une quantité permettant d'atteindre 100 % en poids du mélange de solvants ;
la composition ayant une teneur en solides de 3,0 à 6,0 % en poids.

2. Composition selon la revendication 1, dans laquelle le mélange de solvants comprend à la fois une N-alkylpyrrolidone et une lactone.

3. Composition selon la revendication 2, dans laquelle le mélange de solvants comprend, par rapport au poids du mélange de solvants, 20 à 40 % en poids de la N-alkylpyrrolidone et 20 à 40 % en poids de la lactone, sous réserve que les quantités de la N-alkylpyrrolidone et de la lactone atteignent 45 à 70 % en poids.

4. Composition selon l'une quelconque des revendications précédentes, dans laquelle la N-alkylpyrrolidone est la N-méthyl-pyrrolidone, la lactone est la γ-butyrolactone, l'éther monoalkylique d'éthylène glycol est l'éther monobutylique d'éthylène glycol et l'éther dialkylique de diéthylène glycol est l'éther diéthylique de diéthylène glycol.

5. Composition selon l'une quelconque des revendications précédentes, dans laquelle le groupe photoalignable est choisi parmi les cinnamates et les chalcones ; les coumarines et les quinolones ; les stilbènes et les cyanostilbènes ; les groupes azo ; les chromones et les chromènes ; les groupes mono- et di-acétylène tels que le groupe diphénylacétylène ; le groupe benzylidènephtalimide, le groupe benzylidèneacétophène, le groupe phénylènediacryloyle ; dans lequel le groupe photoalignable est éventuellement substitué.

6. Composition selon l'une quelconque des revendications précédentes, dans laquelle la chaîne latérale, en plus du/des groupe(s) photoalignable(s), comprend en outre un ou plusieurs parmi un groupe aromatique ou alicyclique.

7. Composition selon l'une quelconque des revendications précédentes, dans laquelle la chaîne principale du matériau polymère photoalignable est choisie parmi les acides polyamiques, les polyimides, les polyamides, les polysiloxanes, les polymaléimides et les polyacrylates.

8. Composition selon l'une quelconque des revendications précédentes, dans laquelle le matériau polymère destiné à former un film d'alignement de cristaux liquides est obtenu par polymérisation d'au moins une diamine avec un dianhydride acide, dans laquelle au moins une partie de la diamine présente au moins un groupe photoalignable.

9. Composition selon la revendication 8, dans laquelle le matériau polymère destiné à former un alignement de cristaux liquides comprend des unités répétitives représentées par la formule (1) 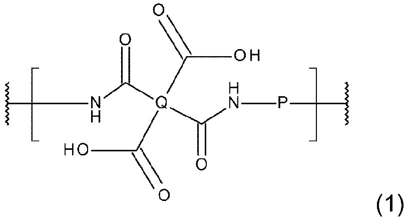 dans laquelle
Q est un résidu tétravalent d'un dianhydride tétracarboxylique ; et
P est un résidu divalent d'une diamine, dans laquelle au moins une partie de P porte une chaîne latérale comprenant un groupe photoalignable.

10. Composition selon l'une quelconque des revendications précédentes, contenant un matériau polymère supplémentaire.

11. Procédé de formation d'un film d'alignement de cristaux liquides, comprenant :
- l'application d'une composition selon la revendication 1 sur un substrat ;
- le séchage du film humide ainsi obtenu, et
- l'irradiation du film séché pour lui conférer une capacité d'alignement des cristaux liquides.

12. Film d'alignement de cristaux liquides obtenu par le procédé selon la revendication 11.

13. Éléments et dispositifs optiques et électro-optiques structurés ou non-structurés comprenant le film d'alignement de cristaux liquides selon la revendication 12.
